# EUROPÄISCHE PATENTSCHRIFT

(11) **EP 3 164 212 B1**
(45) Veröffentlichungstag und Bekanntmachung des Hinweises auf die Patenterteilung: **19.02.2020**
(21) Anmeldenummer: 15730198.7
(22) Anmeldetag: 22.06.2015
(51) Int. Cl.: B01L 3/00

(54) **REAGENZSPEICHER FÜR FLUIDE**
REAGENT RESERVOIR FOR FLUIDS
RÉSERVOIR DE RÉACTIF POUR FLUIDES

(30) Priorität: 01.07.2014 EP 14175207
(43) Veröffentlichungstag der Anmeldung: 10.05.2017
(73) Patentinhaber: thinXXS Microtechnology AG, 66482 Zweibrücken (DE)
(72) Erfinder: WEBER, Lutz, 66981 Münchweiler (DE)
(74) Vertreter: Patentanwälte Bernhardt / Wolff Partnerschaft mbB
(86) Internationale Anmeldenummer: PCT/EP2015/063997
(87) Internationale Veröffentlichungsnummer: WO 2016/000999

(56) Entgegenhaltungen:
- EP-A1- 2 647 435
- EP-A1- 2 679 307
- EP-A1- 2 687 290
- EP-A1- 2 687 290
- DE-A1-102009 009 728
- DE-A1-102010 042 740
- DE-A1-102010 042 740
- DE-A1-102011 002 571
- DE-A1-102011 002 571
- DE-A1-102011 003 856
- US-A1- 2010 044 918
- US-A1- 2010 044 918
- US-A1- 2010 166 609
- US-A1- 2010 166 609

## Beschreibung

Die Erfindung betrifft einen Reagenzspeicher gemäß Oberbegriff des Anspruchs 1.

Ein Reagenzspeicher solcher Art geht aus der WO 2009/0710781 A1 hervor. Die Speicherkammer dieses bekannten Reagenzspeichers ist durch einen tiefgezogenen Bereich, der den Kanalbereich begrenzenden und im Übrigen ebenen Folie gebildet. Die Folie besteht aus einer Aluminiumschicht mit einer der Speicherkammerinnenseite zugewandten Kunststoffbeschichtung. Außerhalb der Speicherkammer und des Kanalbereichs sowie an der Sollbruchstelle ist die Folie mit einer ebenen Oberfläche des Substrats oder einer diese bedeckenden weiteren Folie verklebt oder/und verschweißt.
Die durch Schweißen oder/und Kleben hergestellte Sollbruchstelle zwischen der Kunststoffbeschichtung der Folie und der ebenen Oberfläche des Substrats lässt sich in ihrer Flächenausdehnung nur schwer dosieren. Schwankungseinflüsse resultieren vor allem aus dem Verhalten der Kunststoffbeschichtung der Folie beim Schweißen, der Verteilung der durch ein Schweißwerkzeug erzeugten Temperatur, der erreichbaren Schweißspurbreite von ca. 1 mm, der Positioniergenauigkeit des Schweißwerkzeugs und damit der Reproduzierbarkeit des Abstandes der Sollbruchstelle vom Speicherbereich. Entsprechend schwankt unerwünscht die zum Aufbrechen der Sollbruchstelle erforderliche Kraft.

Reagenzspeicher gemäß Oberbegriff des Anspruchs 1 gehen aus der DE 10 2011 003 856 A1, der EP 2 647 435 A1 sowie der DE 10 2009 009 728 A1 hervor. Beschrieben sind Trennwände in Stegform mit rechteckigem Querschnitt, die eine der Folie zugewandte ebene Randfläche aufweisen, auf der eine mehr oder weniger breite Schweißnaht eine aufbrechbare Verbindung zwischen der Folie und der Randfläche bildet.

Der Erfindung liegt die Aufgabe zugrunde, einen neuen Reagenzspeicher der eingangs genannten Art mit einem eine Sollbruchstelle aufweisenden Kanalbereich zu schaffen, wobei die Aufbrechkraft der Sollbruchstelle in einem engen Toleranzbereich liegt.

Diese Aufgabe wird mit den im kennzeichnenden Teil des Anspruchs 1 angegebenen Merkmalen gelöst.

Durch die erfindungsgemäße Konzentration des die Sollbruchstelle bildenden Verbindungsbereichs auf die an die Folie heranreichende Randfläche der Sperrwand weist der Verbindungsbereich eine definierte, von den Schweißbedingungen unabhängige Ausdehnung und Position auf. Entsprechend gering sind Schwankungen der zum Aufbrechen der Sollbruchstelle erforderlichen Kraft.

Die genannte Randfläche kann an eine Linie angenähert sein, die z.B. senkrecht zur Strömungsrichtung des Fluids verläuft.

Vorzugsweise ist der Kanal durch an der Sollbruchstelle anliegenden Fluiddruck oder mechanische oder/und pneumatische Auslenkung der Folie aufschließbar. Während anliegender Fluiddruck z.B. durch Auspressen einer Speicherkammer mit einer flexiblen Folienwand aufgebaut werden kann, ließe sich zum mechanischen oder/ und pneumatischen Aufbrechen der Sollbruchstelle ein für die Flusszelle vorgesehenes Betriebsgerät einsetzen.

Es versteht sich, dass die Folie an dem Randabschnitt mit der Randfläche der Sperrwand verklebt oder/und verschweißt sein kann. Alternativ oder zusätzlich könnte eine lösbare Klemmverbindung durch ein mit der Flusszelle beweglich verbundenes, auf die Folie einwirkendes Klemmelement hergestellt sein.

Vorzugsweise ist die Sperrwand in einem Arbeitsgang einstückig mit dem Substrat durch Spritzgießen hergestellt.

In einer besonders bevorzugten Ausführungsform der Erfindung schließt die Randfläche der Sperrwand bündig mit dem Öffnungsrand der in dem Substrat gebildeten Ausnehmung ab. So lässt sich sicher stellen, dass die Sperrwand mit ihrem der abdeckenden Folie zugewandten Randabschnitt bis an die Folie heranreicht und die Folie mit einem Arbeitsgang sowohl mit dem Substrat als auch mit dem Randabschnitt der Sperrwand verklebt oder/und verschweißt werden kann. Während es möglich ist, die Sperrwand ringförmig unter Absperrung einer entsprechend radialen Fluidströmung eines ein Durchgangsloch bildenden Kanalbereichs auszubilden, ist in der bevorzugten Ausführungsform der Erfindung die Sperrwand als ein an seinen Enden mit dem Substrat verbundener, die Ausnehmung in dem Substrat durchquerender Sperrsteg ausgebildet.

Erfindungsgemäß verringert sich die Dicke der Sperrwand zu der abdeckenden Folie hin, insbesondere derart, dass die Folie gegen den Randabschnitt der Sperrwand nur linienförmig anliegt. Diese Verjüngung der Dicke der Sperrwand erlaubt neben einem nahezu linienförmigen Randabschnitt eine vergleichsweise große Tiefe der den Kanalbereich bildenden Ausnehmung und damit einen geringen Strömungswiderstand beim Transport des Fluids. Außerdem wird dadurch die mechanische Stabilität der Sperrwand gegenüber Kräften erhöht, die beim Spritzgießen und Verschweißen darauf einwirken.
Entsprechend kann die Sperrwand im Querschnitt z.B. dreieck- oder teilkreisförmig ausgebildet sein.

Erfindungsgemäß liegt der Randabschnitt der Sperrwand mit einer Abplattung gegen die Folie an. Die Länge der Abplattung in Strömungsrichtung und damit die Länge der Sollbruchstelle in dieser Richtung beträgt vorzugsweise weniger als 0,5 mm, insbesondere weniger als 0,1 mm, ggf. weniger als 0,05 mm. Die Höhe der sich verjüngenden Sperrwand und damit der kanalbildenden Ausnehmung des Substrats liegt bevorzugt zwischen 0,1 mm und 1 mm, insbesondere zwischen 0,2 mm und 0,5 mm.

Die Ausnehmung öffnet vorzugsweise zu einer ebenen Fläche eines vorzugsweise plattenförmigen Substrats und die die Ausnehmung abdeckende Folie ist vorzugsweise eine ebene Folie.

In einer weiteren Ausführungsform der Erfindung ist der Kanal in dem die Sollbruchstelle aufweisenden Kanalbereich gegenüber sich daran anschließenden Kanalbereichen im Querschnitt verengt oder erweitert. Entsprechend verlängert oder verkürzt kann ein Sperrsteg sein. Da die Aufbrechkraft der Sollbruchstelle von der Geometrie des Verbindungsbereichs zwischen der Folie und dem Sperrsteg abhängt, kann die Aufbrechkraft durch geeignete Wahl der Verbreiterung oder Verengung eingestellt werden. Die Breite des linienförmigen Sperrstegs liegt bevorzugt zwischen 1 mm und 10 mm, insbesondere zwischen 2 mm und 6 mm. Vorzugsweise liegt die Aufbrechkraft durch einen mechanischen, den Speicherbereich komprimierenden Aktor unter 50 N, insbesondere unter 20 N, ggf. unter 10 N.

Die Speicherkammer kann durch eine Vertiefung in dem Substrat, eine Auswölbung in der Folie oder sowohl durch eine Vertiefung im Substrat als auch eine Auslenkung in der Folie gebildet sein.

Bevorzugt weisen die Folie und/oder das Substrat außerhalb des Speicherbereichs Vorsprünge und/oder Ausnehmungen zur Bildung gegenseitiger Anschläge auf, welche eine kontrollierte Positionierung der Folie relativ zum Substrat erlauben.

Besonders bevorzugt ist die Sollbruchstelle durch Verformung eines die Speicherkammer begrenzenden Abschnitts der Folie aufbrechbar.

In einer weiteren bevorzugten Ausführungsform der Erfindung begrenzt die Folie durchgehend die Speicherkammer und den Kanal bis zu einer Einmündung des Kanals in eine Auslass- oder/und Mischkammer oder bis zu einem Durchgangsloch im Substrat, welches die Speicherkammer fluidisch mit einer Auslass- oder Mischkammer verbindet.

Bei der Folie handelt es sich zweckmäßig um ein Laminat aus einer Metallschicht, insbesondere einer Aluminiumschicht, vorzugsweise einer weichgeglühten Aluminiumschicht, und einer Kunststoffschicht, wobei die Kunststoffschicht dem Fluid zugewandt ist. Das Laminat kann darüber hinaus weitere Schichten aufweisen.

Die Dicke der Kunststoffschicht ist zweckmäßig kleiner oder gleich der Breite der der Folie zugewandten Randfläche der Sperrwand in Kanallängsrichtung bzw. Strömungsrichtung. Zweckmäßig wird durch diese Maßnahme die Masse des aufzuschmelzenden Materials gering gehalten, wodurch sich die Reproduzierbarkeit der Schweißverbindung erhöht.

Vorzugsweise weist ein zum Verschweißen mit der Folie vorgesehener Oberflächenbereich des Substrats, ggf. ausgenommen die Randfläche der Sperrwand, eine Riefenstruktur auf. Durch die Riefenstruktur lässt sich die Festigkeit der Schweißverbindung zwischen der Folie und dem Substrat deutlich erhöhen. Bevorzugt sind Riefen mit Breiten und Höhen zwischen 0,1 mm und 0,5 mm gebildet.

In einer weiteren Ausführungsform der Erfindung weist die Speicherkammer auf ihrer der Folie abgewandten Seite Öffnungskanäle mit je einem durch Schweißen verschließbaren Anschlussstutzen auf, wobei vorzugsweise der Anschlussstutzen in einer Vertiefung in einer ebenen Bodenfläche des Substrats angeordnet und im verschlossenen Zustand zu einer der Folie abgewandten Oberfläche des Substrats zurückversetzt ist. Vorteilhaft lässt sich der Reagenzspeicher mit seiner Bodenfläche dann bündig auf eine ebene Trägerfläche auflegen. Der Innendurchmesser der Anschlussstutzen liegt bevorzugt im Bereich von 0,5 mm bis 2 mm, die Höhe der zu verschweißenden Anschlussstutzen bevorzugt im Bereich von 0,5 mm bis 4 mm. Die Wandstärke der zu verschweißenden Anschlussstutzen bewegt sich vorzugsweise in einem Bereich von 0,5 mm bis 2 mm.

In weiterer Ausgestaltung der Erfindung bildet obengenannte Auslass- oder/und Mischkammer einen Steckersitz für die Verbindung des Reagenzspeichers mit einem Gerät, insbesondere einem Lateral Flow Analysechip, in welchem eine funktionalisierte, üblicherweise für Vor-Ort-Analysen verwendete Lateral Flow Membran in einem Kunststoffgehäuse eingefasst ist. Bevorzugt weist der Steckersitz des Reagenzspeichers Positionier- und/oder Fixierelemente auf, wie z.B. Schnappverschlüsse oder Hinterschnitte, welche eine in Bezug auf die gegenseitige Lage der Gehäuse von Reagenzspeicher und Analysechip reproduzierbare mechanische Verbindung zum Gehäuse des Lateral Flow Analysechip erlaubt. Entsprechend reproduzierbar ist die Lage der Lateral Flow Membran relativ zum Auslasskanal des Reagenzspeichers, sodass das gespeicherte Fluid, wie z.B. ein Waschpuffer, beim Aktuieren des Speicherbereichs reproduzierbar mit der Lateral Flow Membran in Kontakt gebracht werden kann.

Der Reagenzspeicher nach der Erfindung kann auch in einen z.B. solchen Analysechip integriert sein und ein mit diesem gemeinsames Gehäuse aufweisen.

In einer besonders bevorzugten Ausführungsform der Erfindung ist das Substrat mit einem Aktuator oder/und Deckel verbunden, vorzugsweise unlösbar, wobei diese Verbindung z.B. über ein Filmscharnier hergestellt sein kann, das ein Umklappen des Deckels bzw. Aktuators in einer definierten Schwenkrichtung ermöglicht.

Vorzugsweise weist der Aktuator ein durch eine Öffnung in dem Deckel hindurchführbares, den die Speicherkammer bildenden Abschnitt der Folie verformendes Stempelelement auf, beispielsweise durch Umklappen und/oder Verschieben des Aktuators lässt sich dadurch die Höhe der Speicherkammer durch Verformung der Folie, insbesondere plastische Verformung der Folie, verringern, wobei das Stempelelement in einer Endstellung des Aktuators die Höhe der Speicherkammer vorzugsweise komplett aufhebt. So lässt sich die Speicherkammer reproduzierbar entleeren.

Zweckmäßig ist der Aktuator in der Endstellung an dem Substrat oder/und Deckel fixierbar, insbesondere einrastbar, so dass anhand der fixierten Stellung erkannt werden kann, dass der Speicher leer ist.

Auch der Deckel ist zweckmäßig an dem Substrat fixierbar, und insbesondere mit dem Substrat verklemm- oder/und verrastbar.

Vorzugsweise bildet der Deckel gemeinsam mit dem Substrat die obengenannte Auslass- oder/und Mischkammer.

Der Reagenzspeicher kann mit einem Trägerelement für ein Trockenreagenz kombinierbar sein, wobei vorzugsweise das Trägerelement mit dem Trockenreagenz vorgefertigt und bei der Herstellung des Reagenzspeichers daran montiert wird. Zu diesem Zweck weist das Trägerelement neben einem Bereich, in dem das Trockenreagenz aufgebracht wird, einen damit bevorzugt einstückig verbundenen Verbindungsbereich auf. Der Verbindungsbereich kann eine Schraub- oder Schnappverbindung aufweisen. Alternativ besonders bevorzugt ist ein konischer Steckbereich, z.B. entsprechend dem LUER-Standard, welcher eine einfache Montage des Trägerelements an einem Reagenzspeicher Substrat mit korrespondierendem konischen Steckbereich mittels Pressanpassung erlaubt.

Der Reagenzspeicher kann mit einem Trägerelement für die Aufnahme einer zu analysierende Probe in festem oder flüssigem Zustand, wie z.B. Blut, Speichel, Stuhl, einer Wasserprobe, Lebensmitteln, Pflanzen- oder Bodenproben kombinierbar sein, wobei vorzugsweise zuerst die Probe auf das Trägerelement aufgebracht wird und dann das Trägerelement mit dem Reagenzspeichers vor dessen Aktuierung verbunden wird.

Neben einem Aufnahmebereich, auf den ein Probenvolumen vorzugsweise reproduzierbar aufgebracht werden kann, weist das Trägerelement einen damit bevorzugt einstückig verbundenen Verbindungsbereich auf. Der Verbindungsbereich kann eine Schraub- oder Schnappverbindung umfassen. Bevorzugt ist ein konischer Steckbereich, welcher eine besonders einfache Montage des Trägerelements am Substrat des Reagenzspeichers in einen korrespondierenden konischen Einsteckbereich des Substrats mittels Presspassung erlaubt. Vorzugsweise wird dabei der Probenaufnahmebereich oder zumindest die Probe des Trägerelements weitgehend vollständig von einem Kanal- oder Kammerbereich des Reagenzspeichers umschlossen, so dass das aus der Speicherkammer in den Kanalbereich austretende Reagenz die Probe überströmen und von dem Probenträger abwaschen kann. Alternativ kann der an das Trägerelement angrenzende Kanal einen im Vergleich zur Fläche des Probenaufnahmebereichs des Trägers deutlich kleineren Kanalquerschnitt aufweisen und z.B. mäanderförmig über die Probe geführt werden.

Die Trockenreagenz oder/und die Probe kann in dem Kanal oder in der Auslasskammer zur Anordnung kommen.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1 bis 3: einen Reagenzspeicher nach der Erfindung aus einem Kunststoffteil und einer Laminatfolie in verschiedenen Stellungen zueinander beweglicher Komponenten,
- Fig. 4 und 5: das Kunststoffteil des Arbeitsspeichers von Fig. 1 bis 3 in verschiedenen perspektivischen Ansichten,
- Fig. 6 und 7: Detaildarstellungen möglicher Ausführungsformen des Reagenzspeichers von Fig. 1 bis 3 in geschnittener Teildarstellung,
- Fig. 7 und 8: geschnittene Teilansichten von Reagenzspeichern nach der Erfindung kombiniert mit einem Träger für eine Trockenreagenz,
- Fig. 10 bis 13: geschnittene Teilansichten eines Reagenzspeichers nach der Erfindung kombiniert mit einem Träger für eine zu analysierende Probe,
- Fig. 14: eine geschnittene Teildarstellung eines Reagenzspeichers nach der Erfindung integriert in einen Lateral Flow Analysechip zur Analyse von Flüssigkeiten,
- Fig. 15: einen Reagenzspeicher nach der Erfindung integriert in einen Lateral Flow Analysechip kombiniert mit einem Träger für eine feste, zu analysierende Probe, und
- Fig. 16: eine geschnittene Teildarstellung eines Reagenzspeichers nach der Erfindung, in dessen Auslasskammer ein Lateral Flow Analysechip einsteckbar ist.

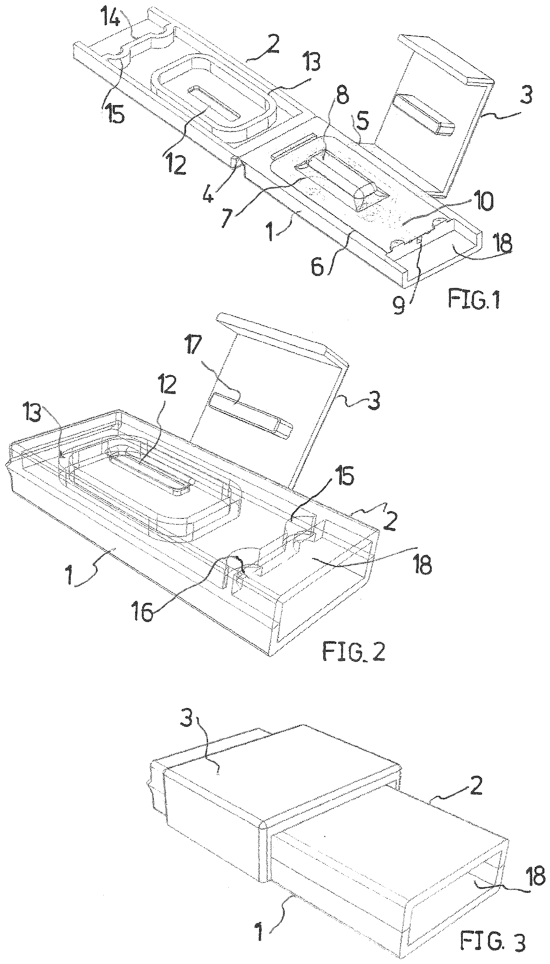

Ein in den Figuren 1 bis 3 gezeigter Reagenzspeicher umfasst ein durch Spritzgießen aus PMMA, PC, PEEK, PP, PE, COC, PP oder anderen Kunststoffen, bevorzugt Polyolefinen, hergestelltes Substrat 1. In dem gezeigten Beispiel ist das Substrat 1 jeweils einstückig mit einem Deckel 2 und einem Aktuator 3 über ein Filmscharnier 4 bzw. 5 verbunden.

Das Substrat 1 ist mit einer Folie 6 verschweißt. In dem gezeigten Beispiel handelt es sich um eine Laminatfolie aus einer weichgeglühten Aluminiumschicht und einer Kunststoffschicht. Eine Auswölbung 7 der Folie 6 bildet einen Speicherraum 8 zwischen der Folie 6 und dem Substrat 1. Die Folie 6 erstreckt sich über den Speicherraum 8 hinaus bis zu einer Endöffnung 9 eines Kanals 10, welcher mit dem Speicherraum 8 in Verbindung steht und in eine Auslasskammer oder/und Mischkammer 18 des Reagenzspeichers einmündet.

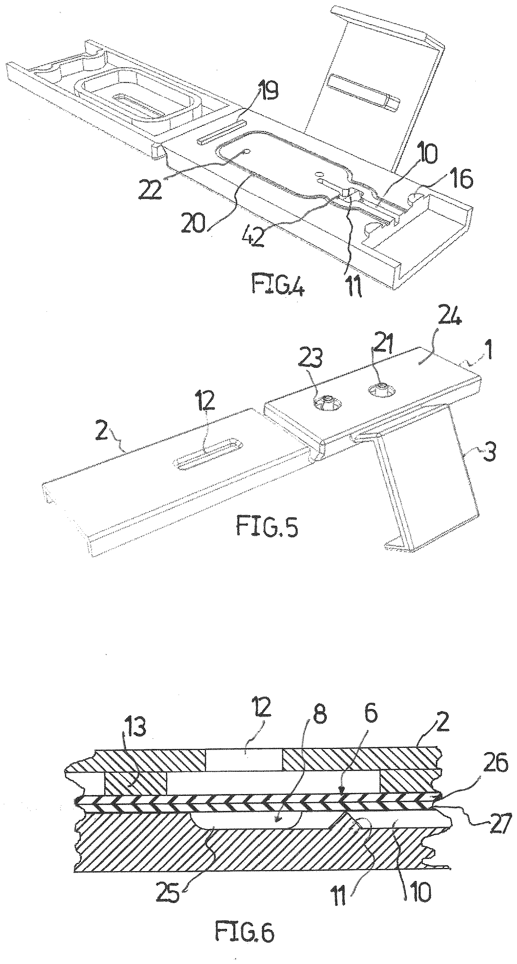

In dem durch eine Rille im Substrat 1 gebildeten und durch die Folie 6 abgedeckten Kanal 10 befindet sich innerhalb einer (am deutlichsten in Fig. 4 sichtbaren) Aufweitung 42 der Rille eine Sperrwand 11, deren der Folie 6 zugewandter Endrand, wie die durch die Folie 6 bedeckte Oberfläche des Substrats 1, mit der Folie 6 verschweißt ist.

Der Deckel 2 weist eine längliche Öffnung 12 auf, welche in dem auf das Substrat 1 umgeklappten Zustand des Deckels 2 dem Speicherraum 8 gegenüberliegt und an dessen längliche Form angepasst ist. Die Öffnung 12 umgibt eine mit dem Deckel 2 einstückig hergestellte Ringwand 13, durch welche der Speicherraum im umgeklappten Zustand des Deckels 2 rundum eingeschlossen ist. Eine Querwand 14 mit Ausbuchtungen 15, in die im umgeklappten Zustand des Deckels 2 Sitzvorsprünge 16 im Substrat 1 eingreifen, sorgt zusammen mit einem Stegvorsprung 19 für einen stabilen Klemmsitz des Deckels 2 auf dem Substrat 1 und eine reproduzierbare Positionierung der Öffnung 12 relativ zum Speicherraum 8.

Wie Fig. 4, welche das Substrat 1 ohne die Folie 6 zeigt, erkennen lässt, ist im Substrat 1 eine Rille 20 gebildet, welche den Speicherraum 8 umgibt und sich ferner entlang des Kanals 10 erstreckt. Durch die Rille20 ist eine besonders feste, den Speicherraum 8 und den Kanal 10 abdichtende Schweißverbindung gesichert. Zur Verbesserung der Schweißverbindung weist die gegen die Folie 6 anliegende Substratoberfläche zudem eine Riefenstruktur auf (nicht gezeigt).

Wie Fig. 4 und 5 erkennen lassen, münden in den Speicherraum 8 zwei je einen Anschlussstutzen 21 umfassende Öffnungskanäle 22. Die Anschlussstutzen 21 stehen nach außen jeweils vom Boden einer Vertiefung 23 vor. Nach Befüllung und Entlüftung des Speicherraums 8 können die Anschlussstutzen 21 derart verschweißt werden, dass ihre freien Enden zur ebenen Bodenfläche 24 des Substrats 1 zurückversetzt sind. Vorteilhaft kann der Speicher so mit seiner Bodenfläche 24 stabil auf einem ebenen Untergrund aufliegen.

Es versteht sich, dass die über die Filmscharniere 4,5 zusammenhängenden Teile 1 bis 3 auch als voneinander unabhängige Einzelteile herstellbar wären.

Zur Entnahme eines in dem Speicherraum 8 enthaltenen Reagenzes lässt sich der Aktuator 3 um 180° verschwenken, wobei ein Stempelelement 17 des Aktuators 3 durch die Öffnung 12 tritt und den Speicherraum 8 zusammendrückt. Dabei reißt die Verschweißung zwischen der Folie 6 und dem Rand der Sperrwand 11, und es kommt zu einem kontrollierten Entnahmefluss des Reagenzes durch den Kanal 10.

In seiner Endlage reicht das Stempelelement 17 nahe an die Oberfläche des Substrats 1 heran und ist davon noch durch die plastisch verformte Folie 6 getrennt.
Die Entleerung des Speicherraums 8 durch plastische Verformung der Folie 6 könnte auch durch einen Stempel als Teil eines Betreibergeräts erfolgen.

Bei der Herstellung des vorangehend beschriebenen Reagenzspeichers wird das Substrat 1, ggf. zusammen mit dem Deckel 2 und dem Aktuator 3 in einem einzigen Fertigungsschritt, bevorzugt durch Spritzgießen hergestellt. In einem weiteren Schritt erfolgt die Herstellung der geformten Folie 6. In einem dritten Fertigungsabschnitt werden das Substrat 1 und die Folie 6 miteinander verschweißt und so der Speicherraum 8 und der Kanals 10 gebildet. Anschließend wird das zu speichernde Fluid über die Anschlussstutzen 21 und die Öffnungen 22 in den Speicherraum 8 eingefüllt, so dass dieser nahezu vollständig, bevorzugt zu mehr als 95 % seines Speichervolumens gefüllt ist. Abschließend werden die Anschlussstutzen 21 verschweißt, um den Speicherbereich hermetisch und lagerstabil zu verschließen. Bevorzugt wird die Wärmeeinwirkung beim Verschweißen so gesteuert, dass der Verschweißungsprozess in weniger als 5 Sekunden, insbesondere in weniger als 2 Sekunden, abgeschlossen ist, um eine schädliche Erwärmung des gespeicherten Reagenz möglichst zu unterbinden.

Der vorangehend beschriebene Reagenzspeicher kann entsprechend den nachfolgend anhand der Figuren 6 bis 16 beschriebenen Ausführungsbeispielen variiert werden.

Fig. 6 zeigt ausschnittsweise einen Reagenzspeicher mit einem Substrat 1 und einem Deckel 2, bei welchem im Unterschied zu dem Ausführungsbeispiel von Fig. 1 bis 5 ein Speicherraum 8 nicht durch eine Auswölbung der Folie 6 sondern durch eine Vertiefung 25 im Substrat 1 gebildet ist. Die Folie 6 besteht, wie bei dem vorangehend beschriebenen Ausführungsbeispiel, aus einem Laminat einer Aluminiumschicht 26 und einer Kunststoffschicht 27. Die dem Speicherinnenraum abgewandte Aluminiumschicht 26 weist vorzugsweise eine Dicke zwischen 10 und 150 µm auf, insbesondere zwischen 30 und 100 µm. Die Dicke der vorzugsweise aus PP oder PE gebildeten Kunststoffschicht 27 liegt bevorzugt zwischen 10 und 100 µm, insbesondere zwischen 20 und 50 µm. Vorzugsweise stimmen das Kunststoffmaterial der Folie 6 und das Kunststoffmaterial des Substrats 1 überein. Abweichend von dem gezeigten Ausführungsbeispiel könnte auch ein Laminat mit weiteren Schichten oder alternativ zur Bildung der Speicherkammer 8 eine ein- oder mehrschichtige Kunststofffolie eingesetzt werden.

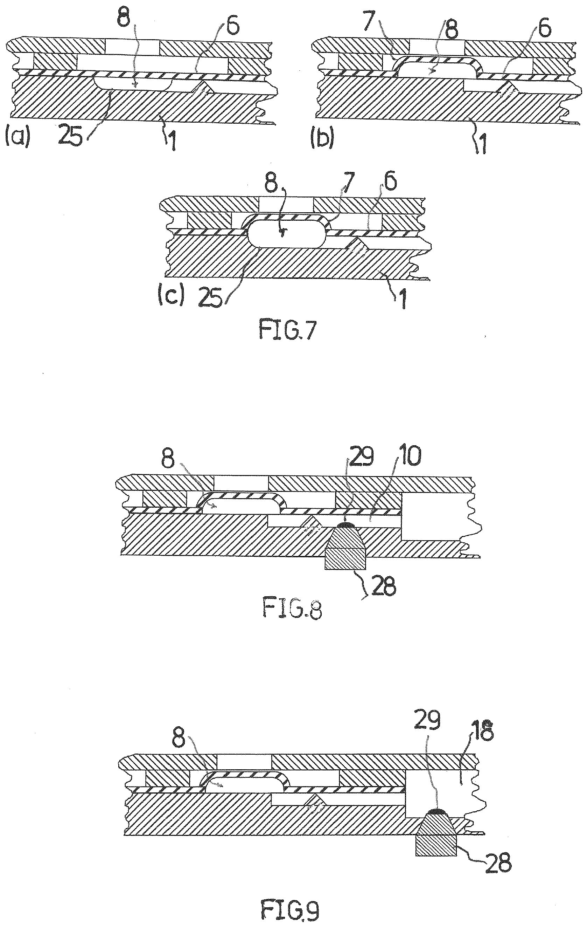

Fig. 7 zeigt die verschiedenen Möglichkeiten für die Bildung eines Speicherraums 8. Gemäß Fig. 7a, ist wie bei dem Ausführungsbeispiel von Fig. 6, ein Speicherraum 8 durch eine Vertiefung 25 im Substrat 1 gebildet. Fig. 7b entspricht dem Ausführungsbeispiel von Fig. 1 bis 5 mit einem durch eine Auswölbung 7 der Folie 4 gebildeten Speicherraum 8. Fig. 7c zeigt einen Reagenzspeicher mit einem Speicherraum 8, der sowohl durch eine Vertiefung 25 im Substrat 1 als auch durch eine Auswölbung 7 in der Folie 6 gebildet ist.
Unabhängig von der Art der Bildung des Speicherraums 8 weist die Sperrwand 11 vorzugsweise eine der Folie 6 zugewandte Endfläche auf, deren Breite in Kanallängsrichtung kleiner oder gleich der Dicke einer mit ihr verschweißten Kunststoffschicht der Folie 6 ist. Vorteilhaft wird dadurch das beim Verschweißen aufzuschmelzende Materialvolumen reduziert und die Reproduzierbarkeit der Verschweißung verbessert.

In Fig. 8 gezeigte Ausführungsbeispiele für einen Reagenzspeicher weisen jeweils ein Trägerelement 28 zur Aufnahme eines Trockenreagenz 29, z.B. eines Primers, eines Reagenz zur Lyse oder von funktionalisierten oder magnetischen Beads auf, wobei aus dem Trockenreagenz und dem in dem Speicherraum 8 gespeicherten Fluid im Zuge der Entleerung des Reagenzspeichers durch Resuspendierung und Mischung ein gewünschtes weiteres Reagenz herstellbar ist. Gemäß Ausführungsbeispiel von Fig. 8 kommt das Trockenreagenz 29 zur Anordnung in dem Kanal 10, so dass es von dem aus dem Speicherraum 8 strömenden Fluid vom Trägerelement 28 heruntergewaschen wird.

Fig. 9 zeigt eine Anordnung des Trockenreagenz 29 in der Auslasskammer 18. In der in diesem Fall als Mischkammer dienenden Kammer 18 wird die Trockenreagenz 29 durch das austretende Fluid aufgelöst, z.B. durch Diffusion und Inkubation. Dieser Auflösungsprozess kann durch Bewegung des Fluids (Agitation) durch (nicht gezeigte) mechanische Mittel oder durch Fluidbewegungen unterstützt werden.
Abweichend von der hier gezeigten Einbringung des Trockenreagenz 29 über das Trägerelement 28 könnte ein Trockenreagenz auch direkt in die Kammer 18 vor dem Schließen des Deckels 2 eingebracht werden.

Vorteilhaft können die Trägerelemente 28 mit dem Trockenreagenz als separate Teile vorgefertigt und im Zuge der Herstellung des Reagenzspeichers mittels konischer Presspassung oder Verschweißung fluiddicht montiert werden.

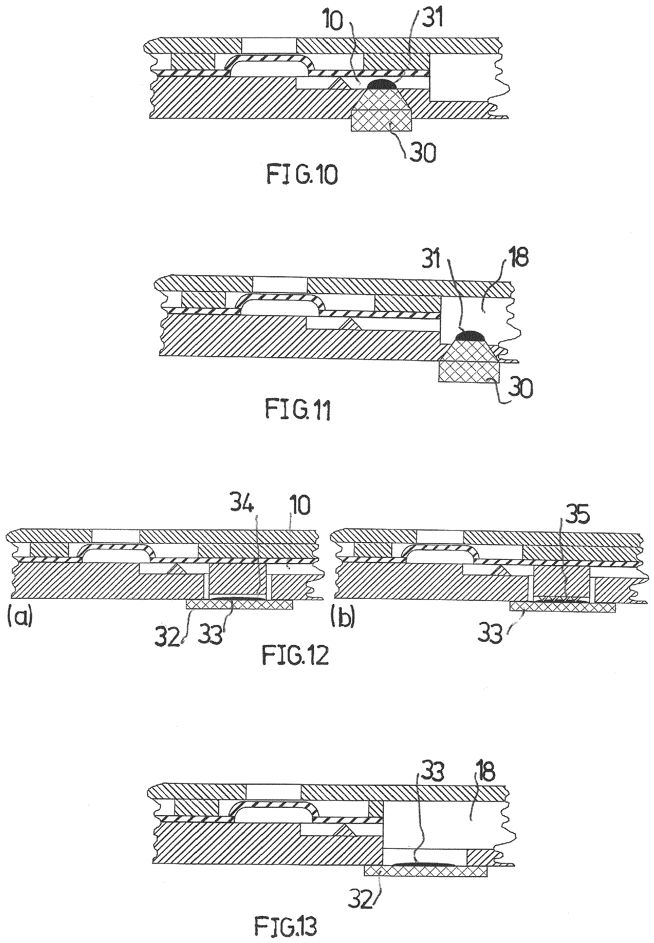

In den nachfolgenden Figuren 10 und 11 beschriebene Reagenzspeicher sind mit einem Probenträgerelement 30 kombiniert, über das sich durch den Nutzer bequem und insbesondere in gewünschter Dosierung eine zu analysierende Probe 31, z.B. Blut, Speichel, Urin, Gewebe, sowie auch eine Pflanzen-, Lebensmittel- oder Bodenprobe in den Reagenzspeicher einbringen lässt. Das Probenträgerelement 30 mit der aufgebrachten Probe 31 lässt sich gemäß Fig. 10 fluiddicht über eine Steckverbindung an dem Reagenzspeicher anbringen, so dass die Probe 31 in dem Kanal 10 angeordnet ist und von dem aus dem Speicherraum 8 entnommenen Reagenz umspült und zumindest teilweise resuspendiert wird. Vorzugsweise wird das Probenträgerelement 30 über einen konischen Verschluss, z.B. entsprechend dem LUER-Standard, in den Reagenzspeicher eingebracht. Die von dem Probenträgerelement 30 durch das überströmende Reagenz heruntergewaschene Probe 31 wird nach Austritt aus dem Reagenzspeicher einer weiteren Analyse/Verarbeitung zugeführt.

Gemäß Fig. 11 kann die Probe auch in der Auslasskammer 18 angeordnet werden, wo die Probe unter Diffusion und Inkubation aufgelöst und ggf. nach Mischung mit einem weiteren Fluid einer Verarbeitung zugeführt wird. Wie bei dem Ausführungsbeispiel von Fig. 9 kann der Auflösungsprozess durch Bewegung (Agitation) des Fluids unter Anwendung mechanischer Mittel oder durch Fluidbewegung unterstützt werden.

Fig. 12 und 13 zeigen Ausführungsbeispiele mit einem plattenförmigen Probenträgerelement 32 für die Aufnahme einer zu analysierenden Probe 33. Solche, als sog. "Absorband Pads" bekannte Probenträger bestehen bevorzugt aus Nitrozellulose, Papier oder anderen porösen Materialien und werden üblicherweise zur Probengewinnung von Körperflüssigkeiten wie Speichel oder z.B. bei Drogentests verwendet. Das Probenträgerelement 32 wird an der Unterseite des Reagenzspeichers angebracht, wo es einen zur Unterseite des Substrats 1 verlegten Abschnitt 34 des Kanals 10 begrenzt. Auch die Probe 33 wird vom Probenträgerelement 32 durch aus dem Speicherraum austretendes Fluid heruntergewaschen und einer Analyse/Verarbeitung zugeführt. Der Kanalabschnitt 34 kann zur Maximierung der Kontaktfläche zwischen Fluid und Probe mäanderförmig, schneckenförmig oder gabelförmig ausgebildet sein.
Das Ausführungsbeispiel von Fig. 12b unterscheidet sich von dem Ausführungsbeispiel von Fig. 12a dadurch, dass in dem Kanalabschnitt 34 nadelförmige Elemente 35 vom Substrat vorstehen, die in die Probe 33 hineinragen und damit die Oberfläche des durch das Fluid überströmten Bereiches der Probenmembran erhöhen und ein Ausdrücken der Probe 33 aus dem Probenträgerelement 32 unterstützen.

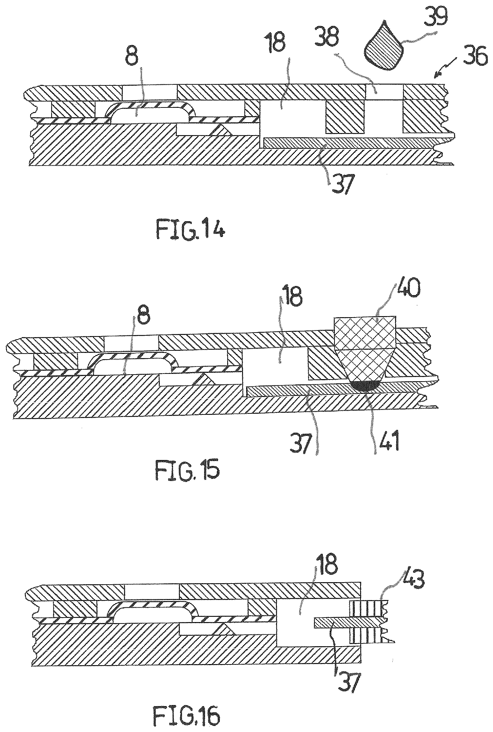

Gemäß Ausführungsbeispiel von Fig. 13 grenzt ein plattenförmiges Probenträgerelement 32 mit einer Probe 33 an die Auslasskammer bzw. Mischkammer 18 an. Figuren 14 betrifft einen Reagenzspeicher, in den ein nach dem Lateral Flow Prinzip arbeitender Analysechip 36 integriert ist und ein mit dem Analysechip 36 gemeinsames Gehäuse aufweist. Eine Lateral Flow Membran 37 ragt in die Auslasskammer 18 des Reagenzspeichers hinein. Durch eine Öffnung 38 hindurch kann die Lateral Flow Membran 37 mit einer Probe 39, z.B. einer Blutprobe, benetzt werden. In dem Speicherraum 8 gespeichertes Reagenz bildet eine Pufferflüssigkeit für die Analysereaktionen in der Lateral Flow Membran.

Kostengünstig bedarf es nur eines einzigen Gehäuses für Speicher und Analysechip.

Bei dem Ausführungsbeispiel von Fig. 15 wird, statt eine Probenflüssigkeit auf die Lateral Flow Membran 37 aufzutropfen, über ein Probenträgerelement 40 eine feste oder flüssige Probe 41 mit einer Lateral Flow Membran 37 in Kontakt gebracht. Beim Durchströmen der Lateral Flow Membran 37 mit dem aus dem Speicherraum entnommenen Reagenz wird die feste Probe 41 abgespült und zur Reaktion gebracht.

Fig. 16 zeigt ein Ausführungsbeispiel, bei dem eine separate Lateral Flow Analysebaugruppe 43 mit einer Lateral Flow Membran 37 in die Auslasskammer 18 eines Reagenzspeichers einsteckbar ist.

## Patentansprüche

1. Reagenzspeicher für Fluide als Teil einer mikrofluidischen Flusszelle oder separate Baugruppe, mit einer Speicherkammer (8), die mit einem Kanal (10) zum Transport von Fluid aus der, in die oder/und durch die Speicherkammer (8) verbunden ist, wobei der Kanal (10) einen durch ein Substrat (1) und eine mit dem Substrat (1) verbundene Folie (6) begrenzten Kanalbereich aufweist, in welchem der Kanal (10) verschlossen und an einer Sollbruchstelle unter Auslenkung der Folie (6) aufschließbar ist, wobei die mit dem Substrat (1) verbundene Folie (6) neben dem Kanalbereich ferner die Speicherkammer (8) begrenzt, wobei die Folie (6) eine den Kanalbereich bildende Ausnehmung in dem Substrat (1) abdeckt und in der Ausnehmung eine den Kanal (10) verschließende, einstückig mit dem Substrat (1) verbundene Sperrwand (11) angeordnet ist, wobei die Sollbruchstelle durch einen aufbrechbaren Verbindungsbereich zwischen der Folie (6) und einem der Folie (6) zugewandten Randabschnitt der Sperrwand (11) mit einer zu der Folie (6) parallelen Randfläche gebildet ist,
**dadurch gekennzeichnet,**
**dass** für die Flächenausdehnung des Verbindungsbereichs die Abmessungen der zu der Folie (6) parallelen Randfläche maßgebend sind, wobei die Randfläche als Abplattung einer sich, in der Dicke zu der abdeckenden Folie (6) hin verringernden, Sperrwand (11) ausgebildet ist.

2. Reagenzspeicher nach Anspruch 1,
**dadurch gekennzeichnet,**
**dass** die Speicherkammer (8) durch eine Vertiefung (25) in dem Substrat (1), eine Auswölbung (7) der Folie (6) oder sowohl durch eine Vertiefung (25) im Substrat (1) als auch eine Auswölbung (7) in der Folie (6) gebildet ist.

3. Reagenzspeicher nach Anspruch 1 oder 2,
**dadurch gekennzeichnet,**
**dass** die Sollbruchstelle durch Verformung eines die Speicherkammer (8) begrenzenden Abschnitts (7) der Folie (6) aufbrechbar ist, wobei vorzugsweise
die Folie (6) die Speicherkammer (8) und den Kanal (10) durchgehend bis zu einer Einmündung (9) des Kanals (10) in eine Auslass- oder/und Mischkammer (18) begrenzt.

4. Reagenzspeicher nach einem der Ansprüche 1 bis 3,
**dadurch gekennzeichnet,**
**dass** die Folie (6) ein Laminat aus einer Metallschicht, insbesondere Aluminiumschicht (26), vorzugsweise weichgeglühten Aluminiumschicht, und wenigstens einer Kunststoffschicht (27) und die Kunststoffschicht (27) dem Fluid zugewandt ist, wobei vorzugsweise die Dicke der Kunststoffschicht (27) kleiner oder gleich der Breite der der Folie (6) zugewandten Randfläche der Sperrwand (11) in Kanallängsrichtung ist.

5. Reagenzspeicher nach einem der Ansprüche 1 bis 4,
**dadurch gekennzeichnet,**
**dass** ein zum Verschweißen mit der Folie (6) vorgesehener Oberflächenbereich des Substrats (1), ggf. ausgenommen die Randfläche der Sperrwand (11), eine Riefenstruktur aufweist.

6. Reagenzspeicher nach einem der Ansprüche 1 bis 5,
**dadurch gekennzeichnet,**
**dass** die Speicherkammer (8) auf ihrer der Folie (6) abgewandten Seite Öffnungskanäle (22) mit je einem durch Schweißen verschließbaren Anschlussstutzen (21) aufweist, wobei der Anschlussstützen (21) in einer Vertiefung (23) im Substrat (1) angeordnet und im verschlossenen Zustand zu einer der Folie (6) abgewandten Oberfläche (24) des Substrats (1) zurückversetzt ist.

7. Reagenzspeicher nach einem der Ansprüche 3 bis 6,
**dadurch gekennzeichnet,**
**dass** die Auslass- oder/und Mischkammer (18) einen Steckersitz für die Verbindung des Reagenzspeichers mit einem Gerät, insbesondere einem Lateral Flow Analysechip (43), bildet.

8. Reagenzspeicher nach einem der Ansprüche 1 bis 7,
**dadurch gekennzeichnet,**
**dass** das Substrat (1) mit einem Aktuator (3) und/oder Deckel (2) verbunden ist, wobei vorzugsweise der Aktuator (3) oder/und Deckel (2) unlösbar und schwenkbar, insbesondere über eine Filmscharnier, mi dem Substrat (1) verbunden ist.

9. Reagenzspeicher nach Anspruch 8,
**dadurch gekennzeichnet,**
**dass** der Aktuator (3) ein durch eine Öffnung (12) in dem Deckel (2) hindurchführbares, den Abschnitt (7) der Folie (6) verformendes Stempelelement (17) umfasst und vorzugsweise das Stempelelement (17) in einer Endstellung des Aktuators (3) die Höhe der Speicherkammer (8) durch die Verformung aufhebt.

10. Reagenzspeicher nach einem der Ansprüche 8 oder 9,
**dadurch gekennzeichnet,**
**dass** der Deckel (2) und/oder Aktuator (3) in der Endstellung an dem Substrat (1) und ggf. der Aktuator (3) an dem Deckel (2) fixierbar, insbesondere mit dem Substrat (1) bzw. Deckel (2) verklemmbar oder/und verrastbar ist.

11. Reagenzspeicher nach einem der Ansprüche 8 bis 10,
**dadurch gekennzeichnet,**
**dass** der Deckel (2) gemeinsam mit dem Substrat (1) die Auslass- oder/und Mischkammer (18) bildet.

12. Reagenzspeicher nach einem der Ansprüche 1 bis 11,
**dadurch gekennzeichnet,**
**dass** der Reagenzspeicher mit einem Trägerelement (28,30,32) für ein Trockenreagenz (29) oder eine Probe (31,33) verbindbar ist, und vorzugsweise das Trockenreagenz (29) oder/und die Probe (31,33) durch das Trägerelement (28,30,33) in dem Kanal (10 oder der Auslasskammer (18) zur Anordnung kommt.

## Claims

1. Reagent reservoir for fluids as part of a microfluidic flow cell or as a separate module, comprising a storage chamber (8) connected to a channel (10) for conveying fluid out of, into and/or through the storage chamber (8), the channel (10) having a channel area which is delimited by a substrate (1) and by a film (6) connected to the substrate (1) and in which the channel (10) is closed and can be opened at a predetermined breaking point by deflection of the film (6), said film (6) connected to the substrate (1) also delimiting the storage chamber (8) in addition to the channel area, the film (6) covering a recess in the substrate (1) forming the channel area, and a sealing wall (11) that closes the channel (10) and is integrally connected to the substrate (1) being arranged in the recess, the predetermined breaking point being formed with an edge surface parallel to the film (6) by a breakable connection area between the film (6) and an edge portion of the sealing wall (11) directed toward the film (6),
**characterized**
**in that** the dimensions of the edge surface parallel to the film (6) determine the surface extent of the connection area, the edge surface being designed as a flattened portion of a sealing wall (11) whose thickness decreases toward the covering film (6).

2. Reagent reservoir according to Claim 1, **characterized in that** the storage chamber (8) is formed by a depression (25) in the substrate (1), by a bulge (7) of the film (6), or by both a depression (25) in the substrate (1) and also a bulge (7) in the film (6).

3. Reagent reservoir according to Claim 1 or 2, **characterized in that** the predetermined breaking point can be broken open by deformation of a portion (7) of the film (6) delimiting the storage chamber (8), wherein the film (6) preferably delimits the storage chamber (8) and the channel (10) continuously as far as a mouth (9) where the channel (10) opens into a discharging and/or mixing chamber (18).

4. Reagent reservoir according to one of Claims 1 to 3, **characterized in that** the film (6) is a laminate composed of a metal layer, in particular an aluminium layer (26), preferably a soft-annealed aluminium layer, and of at least one plastic layer (27), and the plastic layer (27) is directed toward the fluid, wherein the thickness of the plastic layer (27) is preferably less than or equal to the width of the edge surface, directed toward the film (6), of the sealing wall (11) in the longitudinal direction of the channel.

5. Reagent reservoir according to one of Claims 1 to 4, **characterized in that** a surface area of the substrate (1) provided for welding to the film (6) has a furrowed structure, if appropriate with the exception of the edge surface of the sealing wall (11).

6. Reagent reservoir according to one of Claims 1 to 5, **characterized in that** the storage chamber (8), on its side directed away from the film (6), has opening channels (22) with in each case an attachment stub (21) that can be closed by welding, wherein the attachment stub (21) is arranged in a depression (23) in the substrate (1) and, in the closed state, is set back in relation to a surface (24) of the substrate (1) directed away from the film (6).

7. Reagent reservoir according to one of Claims 3 to 6, **characterized in that** the discharging and/or mixing chamber (18) forms a socket for connecting the reagent reservoir to an appliance, in particular to a lateral flow analysis chip (43).

8. Reagent reservoir according to one of Claims 1 to 7, **characterized in that** the substrate (1) is connected to an actuator (3) and/or lid (2), wherein preferably the actuator (3) and/or lid (2) is connected to the substrate (1) non-releasably and pivotably, in particular via a film hinge.

9. Reagent reservoir according to Claim 8, **characterized in that** the actuator (3) comprises a stamp element (17) which can be guided through an opening (12) in the lid (2) and deforms the portion (7) of the film (6), and the stamp element (17), in an end position of the actuator (3), preferably annuls the height of the storage chamber (8) by the deformation.

10. Reagent reservoir according to either of Claims 8 and 9, **characterized in that** the lid (2) and/or actuator (3), in the end position, can be fixed on the substrate (1) and, if appropriate, the actuator (3) can be fixed on the lid (2), in particular clamped and/or latched onto the substrate (1) or lid (2).

11. Reagent reservoir according to one of Claims 8 to 10, **characterized in that** the lid (2) together with the substrate (1) forms the discharging and/or mixing chamber (18).

12. Reagent reservoir according to one of Claims 1 to 11, **characterized in that** the reagent reservoir can be connected to a carrier element (28, 30, 32) for a dry reagent (29) or a sample (31, 33), and the dry reagent (29) and/or the sample (31, 33) preferably comes to be arranged in the channel (10) or the discharging chamber (18) by the carrier element (28, 30, 33).

## Revendications

1. Réservoir à réactif pour des fluides comme partie d'une cellule à écoulement microfluidique ou comme module séparé, présentant une chambre de réservoir (8), qui est reliée à un canal (10) pour le transport du fluide à partir de la chambre de réservoir (8), dans celle-ci et/ou à travers celle-ci, le canal (10) présentant une zone de canal, délimitée par un substrat (1) et une feuille (6) reliée au substrat (1), dans laquelle le canal (10) est fermé et peut être ouvert au niveau d'un point de rupture par déviation de la feuille (6), la feuille (6) reliée au substrat (1) délimitant, en plus de la zone de canal, en outre la chambre de réservoir (8), la feuille (6) recouvrant un évidement formant la zone de canal dans le substrat (1) et une paroi de blocage (11) fermant le canal (10), reliée d'une seule pièce avec le substrat (1), étant disposée dans l'évidement, le point de rupture étant formé par une zone de liaison pouvant être rompue entre la feuille (6) et une zone de bord orientée vers la feuille (6) de la paroi de blocage (11) présentant une surface périphérique parallèle à la feuille (6), **caractérisé en ce que** les dimensions de la surface périphérique parallèle à la feuille (6) sont déterminantes pour la superficie de la zone de liaison, la surface périphérique étant conçue comme un aplatissement d'une paroi de blocage (11) dont l'épaisseur diminue vers la feuille (6) de recouvrement.

2. Réservoir à réactif selon la revendication 1, **caractérisé en ce que** la chambre de réservoir (8) est formée par un creux (25) dans le substrat (1), un bombement (7) de la feuille (6) ou tant par un creux (25) dans le substrat (1) que par un bombement (7) dans la feuille (6).

3. Réservoir à réactif selon la revendication 1 ou 2, **caractérisé en ce que** le point de rupture peut être rompu par la déformation d'une section (7), délimitant la chambre de réservoir (8), de la feuille (6), la feuille (6) délimitant de préférence la chambre de réservoir (8) et le canal (10) en continu jusqu'à l'embouchure (9) du canal (10) dans une chambre de sortie et/ou de mélange (18).

4. Réservoir à réactif selon l'une quelconque des revendications 1 à 3, **caractérisé en ce que** la feuille (6) est un stratifié constitué par une couche métallique, en particulier une couche d'aluminium (26), de préférence une couche d'aluminium recuit, et par au moins une couche de matériau synthétique (27) et la couche de matériau synthétique (27) est orientée vers le fluide, l'épaisseur de la couche de matériau synthétique (27) étant de préférence inférieure ou égale à la largeur de la surface périphérique de la paroi de blocage (11) orientée vers la feuille (6) dans la direction longitudinale du canal.

5. Réservoir à réactif selon l'une quelconque des revendications 1 à 4, **caractérisé en ce qu'**une zone surfacique du substrat (1) prévue pour la soudure avec la feuille (6) présente une structure cannelée, le cas échéant à l'exception de la surface périphérique de la paroi de blocage (11).

6. Réservoir à réactif selon l'une quelconque des revendications 1 à 5, **caractérisé en ce que** la chambre de réservoir (8) présente, sur son côté opposé à la feuille (6), des canaux d'ouverture (22) présentant à chaque fois une tubulure de raccordement (21) pouvant être fermée par soudure, la tubulure de raccordement (21) étant disposée dans un creux (23) dans le substrat (1) et en retrait par rapport à une surface (24) du substrat (1) opposée à la feuille (6) dans l'état fermé.

7. Réservoir à réactif selon l'une quelconque des revendications 3 à 6, **caractérisé en ce que** la chambre de sortie et/ou de mélange (18) forme un siège de raccord pour la liaison du réservoir à réactif avec un appareil, en particulier une puce d'analyse à flux latéral (43).

8. Réservoir à réactif selon l'une quelconque des revendications 1 à 7, **caractérisé en ce que** le substrat (1) est relié à un actionneur (3) et/ou à un couvercle (2), l'actionneur (3) et/ou le couvercle (2) étant de préférence relié(s) de manière inamovible et de manière à pouvoir pivoter, en particulier via une charnière à film, au substrat (1).

9. Réservoir à réactif selon la revendication 8, **caractérisé en ce que** l'actionneur (3) comprend un élément de poinçonnage (17) pouvant être passé à travers une ouverture (12) dans le couvercle (2), déformant la section (7) de la feuille (6) et, de préférence, l'élément de poinçonnage (17) dans une position d'extrémité de l'actionneur (3) relève la hauteur de la chambre à réservoir (8) par la déformation.

10. Réservoir à réactif selon l'une quelconque des revendications 8 ou 9, **caractérisé en ce que** le couvercle (2) et/ou l'actionneur (3) peut être fixé, dans la position d'extrémité, sur le substrat (1) et le cas échéant l'actionneur (3) peut être fixé au couvercle (2), en particulier bloqué sur et/ou encliqueté avec le substrat (1) ou, selon le cas, le couvercle (2).

11. Réservoir à réactif selon l'une quelconque des revendications 8 à 10, **caractérisé en ce que** le couvercle (2) forme, conjointement avec le substrat (1), la chambre de sortie et/ou de mélange (18).

12. Réservoir à réactif selon l'une quelconque des revendications 1 à 11, **caractérisé en ce que** le réservoir à réactif peut être lié à un élément support (28, 30, 32) pour un réactif sec (29) ou un échantillon (31, 33) et le réactif sec (29) et/ou l'échantillon (31, 33) est de préférence agencé par l'élément support (28, 30, 33) dans le canal (10) ou la chambre de sortie (18).
